# FASCICULE DE BREVET EUROPEEN

(11) **EP 2 678 186 B1**
(45) Date de publication et mention de la délivrance du brevet: **07.10.2020**
(21) Numéro de dépôt: 12705272.8
(22) Date de dépôt: 15.02.2012
(51) Int. Cl.: B60N 2/02, B60N 2/01, B60N 2/07, B60N 2/30

(54) **VEHICULE AUTOMOBILE COMPORTANT UN SIEGE A DOSSIER PIVOTANT**
KRAFTFAHRZEUG MIT EINEM SITZ MIT SCHWENKBARER RÜCKENLEHNE
MOTOR VEHICLE COMPRISING A SEAT HAVING A PIVOTABLE BACKREST

(30) Priorité: 23.02.2011 FR 1151456
(43) Date de publication de la demande: 01.01.2014
(73) Titulaire: Renault SAS, 92100 Boulogne Billancourt (FR)
(72) Inventeur: BLANC, Lionel, F-92350 Le Plessis Robinson (FR); TILLIER, Benoit, F-94260 Fresnes (FR)
(86) Numéro de dépôt international: PCT/EP2012/052618
(87) Numéro de publication internationale: WO 2012/113692

(56) Documents cités:
- EP-A2- 0 358 285
- EP-A2- 1 767 394
- WO-A1-2005/108150
- WO-A1-2009/109838
- DE-C1- 3 617 292
- FR-A1- 2 934 530
- GB-A- 2 386 550

## Description

La présente invention se rapporte à un véhicule automobile qui comporte au moins un siège avant et/ou un siège arrière composé d'un dossier et d'une assise.

Le problème de l'accessibilité des sièges avant et des sièges arrière d'un véhicule a engendré de nombreuses solutions techniques pour permettre de mettre les sièges dans une position adéquate. Ainsi pour faciliter la montée ou la descente du passager avant ou du passager arrière, il est connu, par exemple par les documents EP0358285 ou WO2005/108150, de rendre pivotant le siège avant ou le siège arrière dans son intégralité (siège et assise). Par ailleurs, il est bien connu, pour faciliter l'accessibilité au siège arrière en passant par une ouverture de porte située sur le côté d'un siège avant, de prévoir que ce siège avant puisse coulisser vers l'avant et/ou que son dossier puisse se rabattre sur l'assise pour dégager de l'espace. Le document GB 2386550 fait connaître des sièges complètement escamotables grâce à des articulations multiples. Ces solutions entraînent généralement une complication mécanique du siège qui en augmente le prix.

La question s'avère encore plus complexe quand il s'agit de faire un véhicule d'encombrement réduit, par exemple à trois sièges. Le document FR 2934530 fait connaître un véhicule comprenant un siège avant et deux sièges arrière qui peuvent coulisser vers l'avant pour permettre aux passagers arrière de passer par une ouverture de porte prévue en partie sur le côté du véhicule et dans le pavillon du véhicule. Une telle ouverture dans le toit n'est pas toujours souhaitable.

L'invention a pour but de proposer une solution technique nouvelle pour l'escamotage d'un siège, notamment dans le cas d'un véhicule d'encombrement réduit, pour favoriser l'accessibilité à un siège arrière.

L'invention atteint son but grâce à un véhicule automobile qui comporte au moins un siège avant et/ou un siège arrière composé d'une assise sensiblement horizontale et un dossier sensiblement vertical et sensiblement transversal à la direction longitudinale du véhicule, au moins un siège comportant un dossier qui est monté mobile, indépendamment de l'assise, entre une première position, de voyage, sensiblement verticale où le dossier est sensiblement transversal à la direction longitudinale du véhicule et une seconde position, d'escamotage, où le dossier forme un angle par rapport à la première position, caractérisé en ce que le dossier combine une rotation et une translation latérale lors de son mouvement entre la première position et la seconde position de sorte que dans sa seconde position le dossier est déporté latéralement.

Ce déplacement latéral permet un meilleur escamotage du dossier, (généralement un effacement dirigé vers la porte la plus proche), notamment dans le cadre de l'accessibilité à un siège arrière : le siège avant passager comporte ce dossier mobile selon l'invention et facilite, dans sa deuxième position, l'accès d'un passager désirant gagner un siège arrière ou inversement pour en sortir en passant par l'ouverture latérale de porte avant située près du siège.

Alors que dans GB 2386550, figure 5, le mouvement du dossier est une rotation de 90° pure, sans translation, parce que le pivotement se fait sur un axe sensiblement vertical passant par le dossier lui-même, selon l'invention le mouvement combine une rotation sur un axe sensiblement vertical passant par le dossier lui-même avec une translation, selon un angle qui est de préférence inférieur à 90°, et même à inférieur de préférence à 60°.

En dissociant le mouvement du dossier du mouvement de l'assise, on permet une réalisation très différente des moyens de montage qui peut s'avérer très avantageuse, notamment quand le véhicule présente aussi l'une ou l'autre des caractéristiques suivantes, prises individuellement ou éventuellement en combinaison.
- Le dossier est monté par au moins une glissière courbe sur une paroi transversale située à l'arrière du siège. Cette paroi peut être notamment la paroi extérieure d'un coffre ou d'un réservoir empiétant dans l'habitacle du véhicule.
- L'assise du siège à dossier mobile selon l'invention peut-être fixe ou elle-même mobile selon un mouvement indépendant de celui du dossier, par exemple un mouvement de translation et/ou de rabattement.
- Le véhicule comporte au moins un siège avant et un siège arrière décalé longitudinalement du siège avant, le dossier mobile selon l'invention étant le siège avant, moyennant quoi le mouvement du dossier de siège avant facilite l'accès au siège arrière pour un passager passant par une porte latérale avant située à côté du siège avant.
- Le véhicule est un véhicule d'encombrement réduit à trois places décalées longitudinalement et transversalement. Le siège à dossier mobile de l'invention est avantageusement le siège passager avant, tandis que le siège conducteur avant est avantageusement escamotable vers l'avant, par translation et/ou rabattement de dossier. Le siège conducteur est avantageusement décalé en avant du siège avant passager, lui-même décalé en avant du siège arrière.
- Avantageusement, le dossier mobile forme entre ses deux positions un angle d'escamotage (α) d'au moins 10° et de préférence entre 20° et 45°.

D'autres particularités et avantages de l'invention ressortiront à la lecture de la description faite ci-après d'un mode de réalisation particulier de l'invention, donnée à titre indicatif mais non limitatif, en référence aux dessins annexés sur lesquels :
- la Figure 1 représente une vue schématique de dessus d'un véhicule de l'invention avec des passagers dans chacun des trois sièges.
- la Figure 2 représente un schéma simplifié du dossier du siège passager avant et du dossier du siège arrière.
- la Figure 3 représente une vue schématique analogue à la figure 1, mais sans passager, et montrant le dossier du siège passager avant en position escamotée pivotée.
- la Figure 4 représente une vue de détail simplifiée de la paroi située à l'arrière du dossier mobile de l'invention supportant les rails de glissière de pivotement.
- la Figure 5 représente en détail rapproché le chariot de glissière de pivotement du dossier mobile de l'invention.

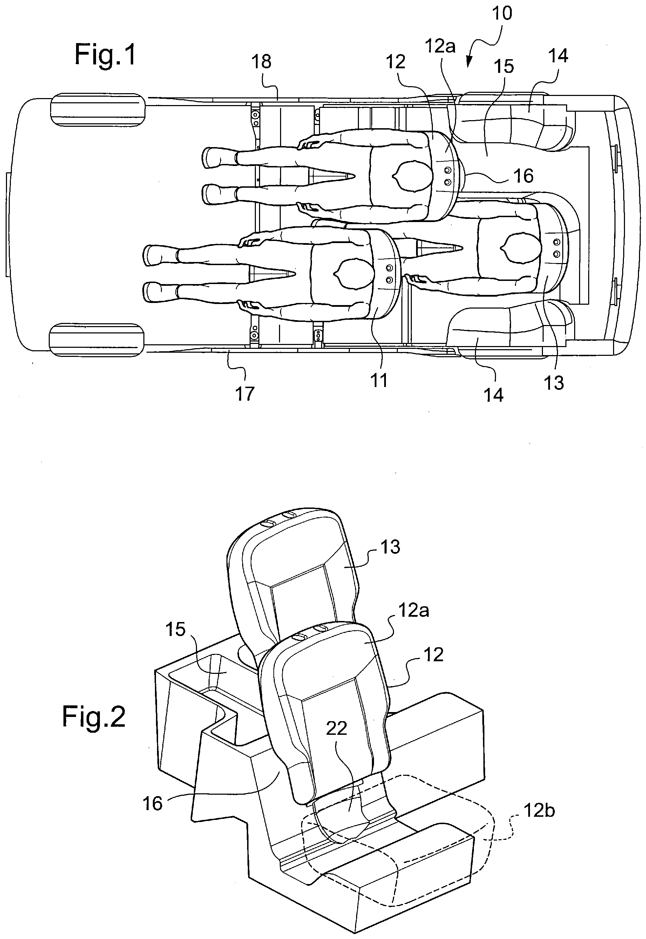

La figure 1 montre de manière schématique l'habitacle 10 d'un véhicule d'encombrement réduit à trois places, comprenant un siège conducteur 11, disposé sur la gauche du véhicule (pour une conduite à gauche) le plus en avant du véhicule, un siège passage avant 12, situé à droite du véhicule et légèrement décalé en arrière par rapport au siège 11, et un siège passager arrière 13 situé le plus en arrière et décalé axialement à la fois par rapport au siège conducteur 11 et au siège passage avant 12. Le siège passager arrière 13 se trouve placé entre les deux passages de roues arrière 14, avec interposition sur le côté droit du siège 13, d'un logement 15 destiné par exemple à accueillir un réservoir, et limité à l'avant par une paroi avant 16 sensiblement verticale ou légèrement inclinée sur la verticale (vers l'arrière de bas en haut). Le dossier 12a du siège passager avant 12 prend appui sur cette paroi avant 16 par des moyens de montage qui seront décrits plus loin : dans sa position de la figure 1, le dossier 12a est sensiblement vertical ou légèrement incliné sur la verticale, et globalement transversal à la direction longitudinale X du véhicule. L'assise 12b du siège 12, seulement esquissée en tirets sur la figure 2, est indépendante cinématiquement du dossier 12a : elle peut être fixe et réalisée de manière particulièrement simple (selon le degré de confort désiré pour la gamme de véhicules), ou mobile, par exemple coulissante vers l'avant, et/ou escamotable par relèvement pivotant autour d'un axe horizontal.

La figure 1 représente aussi les deux portes latérales d'accès du véhicule, par exemple coulissantes : la porte conducteur 17 du côté gauche et la porte passager 18 du côté droit qui sert à la montée et à la descente du passager avant et du passager arrière. Le siège conducteur 11 est avantageusement monté de manière coulissante vers l'avant par des moyens classiques et son dossier est avantageusement rabattable vers l'avant, d'une manière également classique, ce qui permet d'une part l'accès au siège arrière 13 par la porte conducteur 17 si le conducteur n'est pas en place, et ce qui permet aussi, si le passager arrière passe par la porte passager 18, de faciliter son accès. Néanmoins, dans cette dernière situation, la présence du siège avant passager 12 bloque partiellement le passage par la porte passager 18 parce que le dossier 12a du siège 12 vient partiellement devant le siège arrière 13.

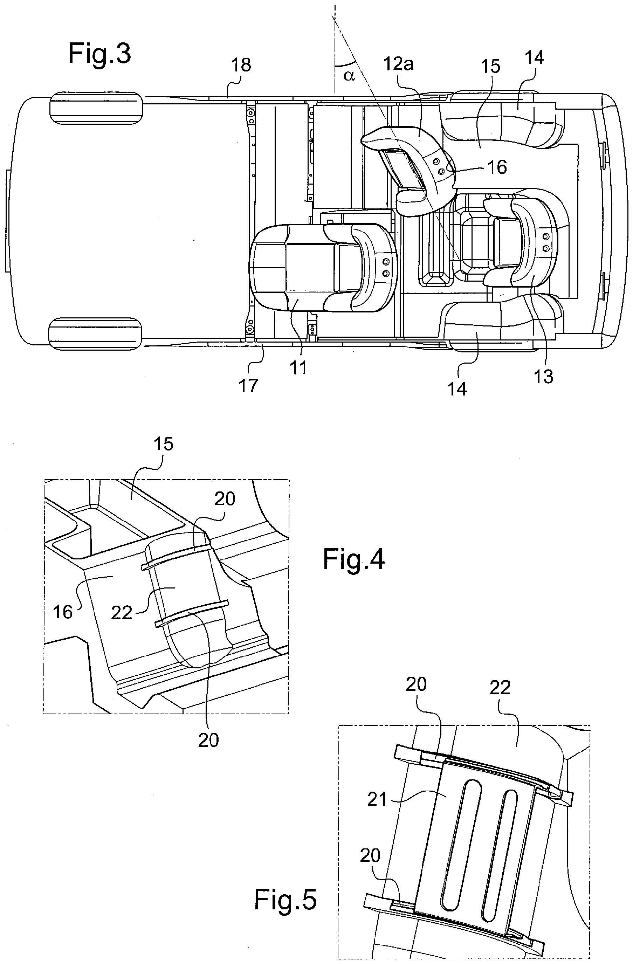

C'est pourquoi selon l'invention le dossier 12a du siège passager 12 peut se déplacer entre une première position, normale, d'appui pour le voyage où il est globalement transversal à la direction longitudinale X du véhicule, position représentée sur les figures 1 et 2, et une seconde position, escamotée, représentée sur la figure 3, où il occupe une position angulaire décalée par rapport à la première position transversale d'un angle d'escamotage α assez important, d'au moins 10°, et de préférence de 20° à 45°. Dans cette seconde position, le dossier 12a est non seulement angulairement décalé, mais il est également latéralement déplacé vers la droite du véhicule grâce au montage des moyens de pivotement qui vont être décrits en référence au figures 4 et 5. De manière remarquable selon l'invention, ce mouvement d'escamotage du dossier 12a est dissocié de l'assise : cela veut dire que l'assise ne pivote pas avec le dossier 12a. Selon les modes de réalisation, elle reste fixe, ou peut être déplacée ou escamotée vers l'avant, mais dans un mouvement qui n'est pas lié directement à celui du dossier 12a. Quoi qu'il en soit, dans la position représentée sur la figure 3, avec le dossier 12a escamoté, le passager arrière peut passer entre ledit dossier 12a et le siège 11, soit en enjambant l'assise fixe du siège 12, soit en ayant auparavant escamoté ladite assise si elle est mobile et/ou escamotable vers l'avant. Le cas échéant, le dossier du siège conducteur 11, s'il n'est pas occupé par le conducteur peut être avancé ou rabattu pour faciliter le passage.

Les figures 4 et 5 montrent que la paroi avant 16, inclinée, du logement 15 supporte deux rails courbes horizontaux parallèles 20 dans lesquels peut coulisser un chariot 21 de forme cintrée lié au dossier 12a du siège 12. Les rails peuvent être formés dans une cavité verticale courbe 22 prévue dans la paroi avant 16. Le montage du dossier 12a par les glissières formées par la coopération des rails 20 et du chariot 21 lui permet d'avoir son mouvement caractéristique combinant un déplacement latéral et une rotation entre sa position d'appui transversale à la direction longitudinale du véhicule et sa position escamoté angulairement décalée. Les rails 20 sont par exemple en arc de cercle concaves dont le centre est situé à l'avant du dossier 12a de siège. Lorsque le dossier 12a se déplace sur les rails 20 entre des deux positions, cela correspond à un pivotement global du dossier autour d'un axe virtuel sensiblement vertical situé à distance en avant du dossier 12a et joignant les centres des deux rails en arc de cercle (à la différence de l'articulation connue par exemple par GB 2386550 qui positionne l'axe de pivotement vertical sensiblement au niveau du dossier). Un tel montage du dossier 12a est à la fois robuste et peu encombrant.

## Revendications

1. Véhicule automobile qui comporte au moins un siège avant (12) et/ou un siège arrière (13) composé d'une assise (12b) sensiblement horizontale et un dossier (12a) sensiblement vertical et sensiblement transversal à la direction longitudinale (X) du véhicule, au moins un siège (12) comportant un dossier (12a) qui est monté mobile, indépendamment de l'assise, entre une première position de voyage sensiblement verticale où le dossier (12a) est sensiblement transversal à la direction longitudinale (X) du véhicule et une seconde position d'escamotage où le dossier forme un angle (α) par rapport à la première position, **caractérisé en ce que** le dossier (12a) combine une rotation et une translation latérale lors de son mouvement entre la première position et la seconde position de sorte que dans sa seconde position le dossier est déporté latéralement.

2. Véhicule selon la revendication 1, caractérisé le dossier déporté forme un angle (α) d'escamotage inférieur à 60° par rapport à la première position.

3. Véhicule selon l'une quelconque des revendications 1 ou 2, **caractérisé en ce que** le siège à dossier mobile (12a) est un siège avant passager (12) du véhicule.

4. Véhicule selon l'une quelconque des revendications précédentes, **caractérisé en ce que** le dossier (12a) est monté par au moins une glissière courbe (20, 21) sur une paroi transversale (16) sensiblement verticale ou légèrement inclinée sur la verticale, située à l'arrière du siège (12).

5. Véhicule selon la revendication 4, **caractérisé en ce que** ladite paroi transversale (16) est la paroi extérieure d'un coffre ou d'un réservoir empiétant dans l'habitacle du véhicule.

6. Véhicule selon l'une quelconque des revendications précédentes, **caractérisé en ce que** l'assise (12b) du siège (12) à dossier mobile (12a) est fixe ou bien mobile selon un mouvement indépendant de celui du dossier (12a).

7. Véhicule selon l'une quelconque des revendications précédentes, qui comporte au moins un siège avant (12) et un siège arrière (13) décalé longitudinalement du siège avant (12) caractérisé en ce le dossier mobile (12a) est prévu sur le siège avant (12).

8. Véhicule selon l'une quelconque des revendications précédentes, **caractérisé en ce qu'**il s'agit d'un véhicule d'encombrement réduit à trois places décalées longitudinalement et transversalement.

9. Véhicule selon l'une quelconque des revendications précédentes, **caractérisé en ce que** le dossier mobile (12a) forme entre ses deux positions un angle d'escamotage (α) d'au moins 10° et de préférence entre 20° et 45°.

10. Véhicule selon l'une quelconque des revendications précédentes, **caractérisé en ce que** le dossier (12a) combine une rotation sur un axe sensiblement vertical passant par le dossier lui-même et une translation latérale lors de son mouvement entre la première position et la seconde position.

## Patentansprüche

1. Kraftfahrzeug, das mindestens einen Vordersitz (12) und/oder einen Rücksitz (13) aufweist, der aus einer im Wesentlichen horizontalen Sitzfläche (12b) und einer im Wesentlichen vertikalen und im Wesentlichen quer zur Längsrichtung (X) des Fahrzeugs angeordneten Rückenlehne (12a) besteht, wobei mindestens ein Sitz (12) eine Rückenlehne (12a) aufweist, die unabhängig von der Sitzfläche beweglich zwischen einer ersten im Wesentlichen vertikalen Reiseposition, wobei die Rückenlehne (12a) im Wesentlichen quer zur Längsrichtung (X) des Fahrzeugs verläuft, und einer zweiten Verstauposition angeordnet ist, in der die Rückenlehne einen Winkel (*α*) in Bezug auf die erste Position bildet, **dadurch gekennzeichnet, dass** die Rückenlehne (12a) während ihrer Bewegung zwischen der ersten Position und der zweiten Position eine Drehung und eine seitliche Verschiebung in der Art kombiniert, dass die Rückenlehne in ihrer zweiten Position seitlich versetzt ist.

2. Fahrzeug nach Anspruch 1, **dadurch gekennzeichnet, dass** die versetzte Rückenlehne einen Verstauwinkel (*α*) von weniger als 60° in Bezug auf die erste Position bildet.

3. Fahrzeug nach einem der Ansprüche 1 oder 2, **dadurch gekennzeichnet, dass** der Sitz mit beweglicher Rückenlehne (12a) ein Beifahrersitz (12) des Fahrzeugs ist.

4. Fahrzeug nach einem der vorhergehenden Ansprüche, **dadurch gekennzeichnet, dass** die Rückenlehne (12a) mithilfe mindestens eines gekrümmten Schlittens (20, 21) an einer Querwand (16) montiert ist, die sich im Wesentlichen vertikal oder leicht zur Vertikalen geneigt hinter dem Sitz (12) befindet.

5. Fahrzeug nach Anspruch 4, **dadurch gekennzeichnet, dass** die Querwand (16) die Außenwand eines Kofferraums oder eines Tanks ist, der sich in den Fahrgastraum des Fahrzeugs hinein ausdehnt.

6. Fahrzeug nach einem der vorhergehenden Ansprüche, **dadurch gekennzeichnet, dass** die Sitzfläche (12b) des Sitzes (12) mit beweglicher Rückenlehne (12a) fest oder auch beweglich gemäß einer von der Rückenlehne (12a) unabhängigen Bewegung ist.

7. Fahrzeug nach einem der vorhergehenden Ansprüche, das mindestens einen Vordersitz (12) und einen Rücksitz (13) aufweist, der in Längsrichtung von dem Vordersitz (12) versetzt ist, **dadurch gekennzeichnet, dass** die bewegliche Rückenlehne (12a) an dem Vordersitz vorgesehen ist (12).

8. Fahrzeug nach einem der vorhergehenden Ansprüche, **dadurch gekennzeichnet, dass** es sich um ein Fahrzeug mit reduzierten Abmessungen mit drei in Längsrichtung und in Querrichtung versetzten Sitzen handelt.

9. Fahrzeug nach einem der vorhergehenden Ansprüche, **dadurch gekennzeichnet, dass** die bewegliche Rückenlehne (12a) zwischen ihren beiden Positionen einen Verstauwinkel (*α*) von mindestens 10° und vorzugsweise zwischen 20° und 45° bildet.

10. Fahrzeug nach einem der vorhergehenden Ansprüche, **dadurch gekennzeichnet, dass** die Rückenlehne (12a) eine Drehung um eine im Wesentlichen vertikale Achse, die durch die Rückenlehne selbst verläuft, und eine seitliche Verschiebung während ihrer Bewegung zwischen der ersten Position und der zweiten Position kombiniert.

## Claims

1. Motor vehicle which has at least one front seat (12) and/or one rear seat (13) made up of a substantially horizontal seat cushion (12b) and a substantially vertical backrest (12a) that is substantially transverse to the longitudinal direction (X) of the vehicle, at least one seat (12) having a backrest (12a) that is mounted so as to be movable, independently of the seat cushion, between a first, substantially vertical travel position, in which the backrest (12a) is substantially transverse to the longitudinal direction (X) of the vehicle and a second, retracted position, in which the backrest forms an angle (*α*) with respect to the first position, **characterized in that** the backrest (12a) combines a rotation and a movement in lateral translation as it moves between the first position and the second position such that, in its second position, the backrest is offset laterally.

2. Vehicle according to Claim 1, **characterized in that** the offset backrest forms a retraction angle (*α*) of less than 60° with respect to the first position.

3. Vehicle according to either one of Claims 1 and 2, **characterized in that** the seat having a movable backrest (12a) is a front passenger seat (12) of the vehicle.

4. Vehicle according to any one of the preceding claims, **characterized in that** the backrest (12a) is mounted by way of at least one curved slideway (20, 21) on a transverse wall (16) that is substantially vertical or inclined slightly with respect to the vertical, situated behind the seat (12).

5. Vehicle according to Claim 4, **characterized in that** said transverse wall (16) is the outer wall of a luggage compartment or of a tank protruding into the passenger compartment of the vehicle.

6. Vehicle according to any one of the preceding claims, **characterized in that** the seat cushion (12b) of the seat (12) having a movable backrest (12a) is fixed or movable by way of a movement independent of that of the backrest (12a).

7. Vehicle according to any one of the preceding claims, which has at least one front seat (12) and one rear seat (13) offset longitudinally with respect to the front seat (12), **characterized in that** the movable backrest (12a) is provided on the front seat (12).

8. Vehicle according to any one of the preceding claims, **characterized in that** it is a compact vehicle with three seats offset longitudinally and transversely.

9. Vehicle according to any one of the preceding claims, **characterized in that** the movable backrest (12a) forms, between its two positions, a retraction angle (*α*) of at least 10° and preferably between 20° and 45°.

10. Vehicle according to any one of the preceding claims, **characterized in that** the backrest (12a) combines a rotation about a substantially vertical axis passing through the backrest itself and a movement in lateral translation as it moves between the first position and the second position.
